# DEMANDE DE BREVET EUROPEEN

(11) **EP 4 236 057 A1**
(43) Date de publication de la demande: **30.08.2023**
(21) Numéro de dépôt: 23154980.9
(22) Date de dépôt: 03.02.2023
(51) Int. Cl.: H02N 2/10, G02B 26/08, H02N 2/12

(54) **DISPOSITIF PIÉZOÉLECTRIQUE DE POINTAGE**

(30) Priorité: 24.02.2022 FR 2201629
(71) Demandeur: Cedrat Technologies, 38240 Meylan (FR)
(72) Inventeur: AIGOUY, Gérald, 38240 MEYLAN (FR); GUIGNABERT, Adrien, 38240 MEYLAN (FR); BETSCH, Etienne, 38240 MEYLAN (FR); BEDEK, Augustin, 38240 MEYLAN (FR); BOURGEOT, Nicolas, 38240 MEYLAN (FR); CLAEYSSEN, Frank, 38420 MEYLAN (FR)
(74) Mandataire: Talbot, Alexandre

(57) **Abrégé**

Un dispositif piézoélectrique comprend un bâti fixe (1) et un porte-miroir (4) définissant plusieurs points de support (4a) fixant un miroir (5). Le porte-miroir (4) est monté mobile en rotation. Plusieurs actionneurs piézoélectriques (2) sont fixés au support (1) et se déforment indépendamment en translation dirigée selon une première orientation (AA). Chaque actionneur piézoélectrique (2) déplace la zone de support du porte-miroir (4). Le porte-miroir (4) définit plusieurs points de fixation. Chaque point de fixation (4b) relie mécaniquement le porte-miroir (4) avec un actionneur piézoélectrique (2). Les points de support (4a) et de fixation (4b) sont distincts. Le porte-miroir (4) définit une pluralité de zones de flexion (4d). Les points de support (4a) sont mobiles entre eux. Les actionneurs piézoélectriques (2) alimentés en push-pull entrainent les points de support (4a) ce qui fait tourner le miroir (5) perpendiculairement à la première direction (AA).

## Description

### Domaine technique

L'invention concerne un dispositif piézoélectrique de pointage.

### Technique antérieure

Dans le domaine du pointage optique, il est connu d'utiliser des dispositifs piézoélectriques qui possèdent un miroir mobile. Le miroir se déplace suivant des rotations à débattement limité pour orienter un faisceau optique ou un rayon laser. Afin de mouvoir le miroir, on utilise des actionneurs piézoélectriques qui sont connectés mécaniquement au miroir de sorte que la déformation de l'actionneur piézoélectrique entraine la rotation du miroir, suivant une ou deux directions perpendiculaires à un axe optique de référence.

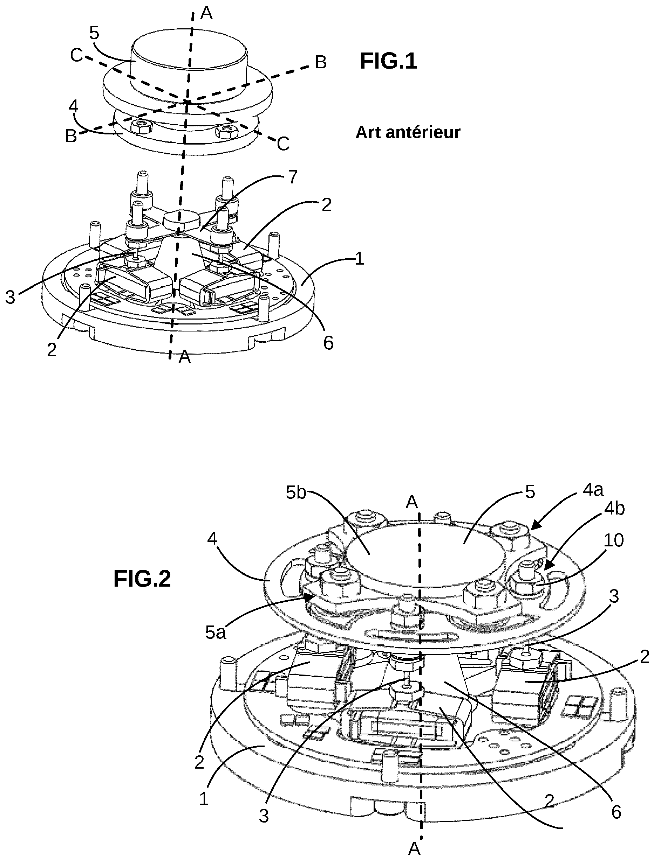

La demanderesse commercialise un mécanisme piézoélectrique de « tip-tilt » illustré à la figure 1 qui possède un bâti fixe 1 sur lequel quatre actionneurs piézoélectriques 2 sont montés pour se déformer selon quatre axes qui sont parallèles à une première direction AA définie par l'axe optique de référence. Les actionneurs piézoélectriques 2 sont chacun surmontés par une tige de flexion 3. Les quatre tiges de flexion 3 forment une liaison mécanique flexible entre les actionneurs piézoélectriques 2 et un porte-miroir 4. Le porte-miroir 4 est surmonté par un miroir 5. Les axes de déformation des actionneurs sont disposés à équidistance du centre du miroir 5 circulaire utilisé.

Le porte-miroir 4 est réalisé très rigide de manière à ne pas se déformer sous l'effet des efforts appliqués par les actionneurs piézoélectriques 2 et retransmis par les tiges de flexion 3. Les tiges de flexion 3 sont reliées à un plot d'ancrage 6 qui est immobile. Le plot d'ancrage 6 est relié aux quatre tiges de flexion 3 au moyen d'un palier flexible 7 qui est formé par quatre fléchisseurs de forme rectiligne agencés sous la forme d'une croix.

Le palier flexible 7 est souple suivant la première direction AA et raide dans les deux directions perpendiculaires à cette dernière. Le palier flexible 7 augmente la tenue aux vibrations et aux chocs que l'on peut rencontrer notamment dans les applications embarquées. Enfin, en combinaison avec les tiges de flexion 3, le palier flexible 7 contribue à transformer une translation du sommet de l'actionneur piézoélectrique 2 en une rotation à débattement limité, du sommet de la tige de flexion 3.

Les quatre actionneurs piézoélectriques 2 travaillent indépendamment les uns des autres. Les tiges de flexion 3 sont montées fixement à l'actionneur piézoélectrique 2 et au porte-miroir 4. Pour obtenir efficacement une rotation à débattement limité, il est classique d'alimenter les actionneurs en mode « push-pull » par paires. Deux actionneurs disposés diamétralement opposés par rapport à l'axe optique de référence passant par le centre du miroir 5 sont alimentés de telle sorte qu'un actionneur se dilate pendant que l'autre se contracte.

Dans la configuration illustrée à la figure 1, le mécanisme possède une première paire d'actionneurs alignés suivant une direction B-B pour produire une rotation autour d'une direction C-C à la fois perpendiculaire à la direction A-A et perpendiculaire à la direction B-B. La seconde paire d'actionneurs formée par les actionneurs alignés selon la direction C-C, produit une rotation autour de la direction B-B.

Il a été constaté que le dispositif piézoélectrique illustré à la figure 1 peut générer des erreurs de front d'onde en utilisation. Il s'est avéré que ces erreurs de front d'onde ne sont pas toujours présentes et proviennent d'une déformation du miroir 5 fixé sur le porte-miroir 4. Un tel enseignement est présenté dans le document RU190404 où le miroir est fixé à un porte-miroir rigide qui possède quatre points d'actionnement disposés aux quatre coins d'un rectangle. Les quatre points d'actionnement sont fixés directement à quatre actionneurs de manière à faire pivoter le miroir selon deux axes. Le porte-miroir est fixé à une platine déformable au moyen de trois paires de vis disposées pour former trois points de fixation alignés. La connexion entre le porte-miroir et la platine est réalisée selon une première direction alors que la connexion entre la platine et un bâti fixe est réalisée selon une seconde direction perpendiculaire à la première direction. La platine déformable permet de décaler la fréquence de vibration de la structure vers de plus hautes fréquences et ainsi améliorer la résistance aux vibrations de la structure.

Le document US 7,009,752 divulgue une structure support miroir sur laquelle est fixée un miroir. La structure support miroir est reliée à un plan de référence par trois actionneurs de type « voice coil actuator » qui sont disposés en triangle et qui se déforment pour faire pivoter la structure support miroir selon deux axes perpendiculaires. Les trois actionneurs sont fixés directement à la structure support miroir qui est rigide et supporte le miroir. Le porte-miroir est réalisé dans un matériau à forte rigidité, par exemple en béryllium, alors que le miroir est réalisé en verre recouvert pas un revêtement réflecteur. En complément des actionneurs, la structure support miroir est fixée au plan de référence par des éléments de flexion qui contraignent les axes de pivotement du miroir.

Une autre configuration de dispositif piézoélectrique est illustrée dans le document FR2850218 ou US6927528, et présente ces mêmes limitations.

Les actionneurs piézoélectriques 2 présentent un débattement faible ce qui limite fortement la course angulaire accessible au porte-miroir 4. Pour produire un débattement angulaire plus important dans un mécanisme tel que celui illustré à la figure 1, il y a un compromis à trouver vis-à-vis de l'encombrement et du cout d'un actionneur piézoélectrique 2. Cela se traduit généralement, par l'utilisation d'actionneurs 2 plus importants, au prix d'un encombrement et d'un coût plus importants.

Or, pour les mécanismes de pointage, en plus des contraintes précédentes, il est demandé d'obtenir une course angulaire élevée dans un encombrement réduit, avec un minimum de pièces afin d'en réduire le coût.

Il est connu un autre actionneur de type « tip-tilt », qui possède un porte-miroir infiniment rigide et un miroir déformable sur commande. Le miroir est fixé au moyen de plusieurs vis. Un joint-torique (O-ring) est placé entre le miroir et le porte-miroir et il est contraint entre ces deux éléments. Le joint-torique est déformé élastiquement en compression lors du serrage des vis. Une telle solution technique est divulguée dans le document « Low order high accuracy déformable mirror based on electromagnetic actuators » de F.P. Wildi et al. Proceedings Volume 6715, Optomechatronic Actuators and Manipulation III ; 67150C (2007). Le miroir est déformé au moyen de plusieurs aimants qui sont actionnés par plusieurs champs magnétiques.

### Objet de l'invention

Un objet de l'invention consiste à prévoir un dispositif piézoélectrique qui limite les déformations indésirables du miroir afin d'obtenir une bonne qualité optique.

On tend à résoudre ces inconvénients au moyen d'un dispositif piézoélectrique qui comporte :
- un bâti fixe ;
- des actionneurs piézoélectriques fixés au bâti fixe, les actionneurs piézoélectriques étant aptes à se déformer indépendamment les uns des autres selon une translation linéaire, chaque translation linéaire étant dirigée selon une première orientation ;
- un porte-miroir définissant des points de fixation et au moins trois points de support, les au moins trois points de support étant destinés à monter fixement un miroir sur le porte-miroir, les au moins trois points de support étant distincts des points de fixation, les au moins trois points de support définissant une zone de support montée mobile en rotation par rapport au bâti fixe autour d'au moins un premier axe de rotation, la première direction étant perpendiculaire audit au moins un premier axe de rotation, chaque point de fixation étant relié fonctionnellement à un actionneur piézoélectrique ;
- un convertisseur disposé dans au moins une liaison mécanique reliant les actionneurs piézoélectriques et les points de support de sorte que la translation linéaire d'un ou de plusieurs des actionneurs piézoélectriques entraine la rotation de la zone de support par rapport au bâti fixe autour dudit au moins un premier axe de rotation.

Le dispositif piézoélectrique est remarquable en ce qu'au moins un des au moins trois points de support est un point de support monté mobile indépendamment des autres points de support dans la première direction par déformation élastique du porte-miroir, en l'absence du miroir.

Préférentiellement, chaque point de support est un point de support monté mobile indépendamment des autres points de support dans la première direction par déformation élastique d'une partie du porte-miroir, en l'absence du miroir.

Selon un développement, le dispositif comporte une pluralité de platines, chaque point de support étant monté sur une platine. Chaque platine est fixée au reste du porte-miroir par une liaison en flexion pour que chaque platine soit montée mobile indépendamment des autres platines, selon la première direction, en l'absence du miroir.

Préférentiellement, les points de support sont disposés à équidistance d'un centre. Les liaisons en flexion sont disposées plus près du centre que les points de support dans une observation selon la première direction.

Préférentiellement, les points de support sont disposés à équidistance d'un centre. Les points de support sont plus éloignés du centre que les points de fixation.

Selon un développement, les points de support sont disposés à équidistance d'un centre. Une partie sommitale d'au moins un des actionneurs piézoélectriques comporte une barre s'étendant selon une direction perpendiculaire à la première direction radialement par rapport au centre pour que la connexion mécanique entre l'actionneur piézoélectrique et le point de fixation associé soit plus proche du centre que du barreau piézoélectrique de l'actionneur piézoélectrique, dans une observation selon la première direction.

Préférentiellement, les platines sont configurées pour se déplacer selon au moins une direction perpendiculaire à la première direction.

De manière avantageuse, les points de support sont disposés à équidistance d'un centre. La liaison en flexion est également configurée pour autoriser un déplacement radial des points de support perpendiculairement à la première direction et par rapport au centre.

Selon un autre développement, le dispositif comporte des platines additionnelles. Le centre est monté fixement par rapport au bâti fixe au moyen d'un plot d'ancrage. Des bras s'étendent depuis le centre, chaque bras étant fixé à une des platines par la liaison en flexion, chaque bras étant fixé à une des platines additionnelles par une liaison en torsion, la liaison en torsion faisant pivoter le bras par rapport à la platine additionnelle autour d'un axe perpendiculaire à la première direction, chaque platine additionnelle recevant un point de fixation.

Selon un autre développement, la liaison en torsion est disposée plus près du centre que la liaison en flexion, le long de la direction d'extension du bras depuis le centre jusqu'à l'extrémité opposée.

De manière avantageuse, la liaison en torsion est disposée plus près du centre que le point de support, dans une observation selon la première direction.

Selon un développement, les bras s'étendent sous la forme de spirales.

Avantageusement, la liaison en flexion définit également une liaison en torsion autour d'un axe parallèle à la première direction et passant par la liaison en flexion.

Avantageusement, lequel le porte-miroir est directement fixé à au moins un des actionneurs piézoélectriques de sorte que le au moins un point de fixation se déplace selon une translation linéaire dans la première direction.

Selon un développement, chaque actionneur piézoélectrique est fixé directement à un des points de fixation, chaque point de fixation appartenant à une platine additionnelle qui est plus rigide que le bras sur lequel la platine additionnelle est fixée par la liaison en torsion.

Préférentiellement, chaque liaison en flexion possède une portion conformée en arc de cercle autour du centre.

Selon un autre développement, les points de support sont disposés à équidistance d'un centre. Le centre est monté fixement par rapport au bâti fixe au moyen d'un plot d'ancrage. Les points de fixation sont reliés aux actionneurs piézoélectriques par une tige de flexion s'étendant principalement selon la première direction, une extrémité de la tige de flexion étant fixée à un des actionneurs, une autre extrémité de la tige de flexion étant fixée à un des points de fixation.

Avantageusement, les platines et les liaisons en flexion sont définies par des premières fentes qui sont traversantes selon la première direction. Dans une observation selon la première direction, chaque ligne droite reliant un des points de support à un point de fixation enjambe au moins une des premières fentes.

De manière préférentielle, le porte-miroir possède des deuxièmes fentes qui sont traversantes selon la première direction et qui s'étendent sous la forme de spirales à partir du centre, les deuxièmes fentes séparant le centre et les points de fixation.

Il est avantageux de prévoir que chaque point de support soit disposé à équidistance de deux des points de fixation qui sont les plus proches.

Préférentiellement, les points de support sont disposés à équidistance d'un centre. Le centre est mobile par rapport à un plot d'ancrage selon la première direction. Le convertisseur possède un palier flexible ayant une portion fixe montée fixement par rapport au bâti fixe au moyen du plot d'ancrage et des fléchisseurs s'étendant à partir de la portion fixe selon des directions perpendiculaires à la première direction, les fléchisseurs étant montés fixement aux points de fixation. Les actionneurs piézoélectriques sont reliés aux points de fixation par des tiges de flexion. Les points de fixation sont montés immobiles les uns par rapport aux autres dans le porte-miroir.

De manière avantageuse, le dispositif comporte un miroir fixé au porte-miroir au moyen des points de support, le miroir définissant une connexion mécanique avec les points de support qui fixe la position du au moins un point de support mobile par rapport aux autres points de support.

### Description sommaire des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1 illustre, de manière schématique, une vue en perspective d'un dispositif piézoélectrique de l'art antérieur surmonté par un miroir ;
- la figure 2 représente de manière schématique, en perspective, un mode de réalisation d'un dispositif piézoélectrique incluant quatre actionneurs piézoélectriques surmontés par une tige de flexion et un porte-miroir à zones déformables ;
- la figure 3 représente de manière schématique, une vue explosée du dispositif piézoélectrique illustré à la figure 2 ;
- la figure 4 représente de manière schématique, une vue de dessus du porte-miroir illustré à la figure 3 ;
- la figure 5 représente de manière schématique, en perspective, un autre mode de réalisation d'un dispositif piézoélectrique incluant quatre actionneurs piézoélectriques surmontés par un bras de levier, une tige de flexion et un porte-miroir à zones déformables ;
- la figure 6 représente de manière schématique, une vue explosée du dispositif piézoélectrique illustré à la figure 5 ;
- la figure 7 représente de manière schématique, une vue en perspective, d'un actionneur piézoélectrique dont la partie sommitale possède un bras d'actionnement déportant une tige de flexion ;
- la figure 8 représente de manière schématique, une vue d'un porte-miroir illustré à la figure 6 destiné à supporter un miroir ;
- la figure 9 représente de manière schématique, une vue en perspective d'un troisième mode de réalisation d'un dispositif piézoélectrique surmonté par un miroir avec un porte-miroir à zones déformables ;
- la figure 10 représente de manière schématique, une vue explosée du dispositif piézoélectrique illustré à la figure 9 ;
- la figure 11 représente de manière schématique, une vue de dessus d'un porte-miroir assurant la liaison mécanique entre le miroir, les actionneurs piézoélectriques, et le plot d'ancrage ;
- la figure 12 représente de manière schématique un autre mode de réalisation d'un porte-miroir qui peut être utilisé en remplacement du porte-miroir illustré à la figure 8 ;
- la figure 13 représente de manière schématique un autre mode de réalisation d'un porte-miroir qui peut être utilisé en remplacement du porte-miroir illustré à la figure 8 ;
- la figure 14 représente de manière schématique encore un autre mode de réalisation d'un porte-miroir qui peut être utilisé en remplacement du porte-miroir illustré à la 8 ;
- la figure 15 représente de manière schématique encore un autre mode de réalisation d'un porte-miroir qui peut être utilisé en remplacement du porte-miroir illustré à la 8 en vue d'utiliser un miroir assemblé par collage ;
- la figure 16 représente de manière schématique le porte-miroir de la figure 15 assemblé avec un miroir collé.

### Description des modes de réalisation

Différentes configurations de dispositifs piézoélectriques sont illustrées aux figures 2 à 16. Un dispositif piézoélectrique possède un bâti fixe 1 qui sert de support et dont une première face est surmontée par plusieurs actionneurs piézoélectriques 2, de préférence, au moins deux actionneurs piézoélectriques 2, encore plus préférentiellement au moins trois actionneurs piézoélectriques 2 non-alignés voire quatre ou au moins quatre actionneurs piézoélectriques 2 non-alignés. Les actionneurs piézoélectriques 2 sont fixés au bâti fixe 1. Dans les différents modes de réalisation illustrés, quatre actionneurs piézoélectriques 2 sont utilisés.

Les actionneurs piézoélectriques 2 sont fixés sur le bâti fixe 1 et s'étendent depuis une face du bâti fixe 1. Les actionneurs piézoélectriques 2 sont aptes à se déformer indépendamment les uns des autres selon une translation linéaire. Chaque translation linéaire est dirigée selon un axe qui est parallèle à une première direction AA. Les actionneurs piézoélectriques 2 sont reliés à un circuit de commande configuré pour actionner les actionneurs piézoélectriques, et préférentiellement apte à les actionner indépendamment les uns des autres.

Le dispositif piézoélectrique possède un porte-miroir 4 destiné à recevoir et supporter un miroir 5. Le miroir 5 est monté amovible par rapport au porte-miroir 4. Le porte-miroir 4 réalise la liaison mécanique entre les actionneurs piézoélectriques 2 et le miroir 5. Le porte-miroir 4 est une pièce d'interfaçage entre le miroir 5 et les actionneurs piézoélectriques 2. Le porte-miroir 4 définit plusieurs points de support 4a destinés à monter fixement le miroir 5. Les points de support 4a définissent une zone de support du porte-miroir 4. La zone de support du porte-miroir 4 est montée mobile en rotation autour d'au moins un premier axe de rotation BB par rapport au bâti fixe 1 de sorte que le miroir 5 soit monté mobile en rotation autour dudit au moins un premier axe de rotation BB qui est perpendiculaire ou sensiblement perpendiculaire à la première direction AA. De préférence, la zone de support du porte-miroir 4 est configurée pour que le miroir 5 soit également monté mobile en rotation autour d'un deuxième axe de rotation CC qui est perpendiculaire à la première direction AA et perpendiculaire au premier axe de rotation BB. Les points de support 4a du porte-miroir 4 coopèrent avec les points de support 5a du miroir 5. Le porte-miroir 4 possède au moins trois points de support 4a pour fixer efficacement le miroir 5 sur le porte-miroir 4, de préférence au moins quatre points de support 4a. Une fois le miroir 5 fixé au porte-miroir 4, le miroir 5 suit les mêmes mouvements que la zone de support.

Le porte-miroir 4 définit plusieurs points de fixation 4b de préférence au moins trois points de fixation, par exemple quatre points de fixation 4b. Les points de support 4a sont distincts des points de fixation 4b. Chaque actionneur piézoélectrique 2 est associé mécaniquement à un point de fixation 4b, par une liaison mécanique directe ou indirecte, de sorte que l'actionnement de l'actionneur piézoélectrique 2 déplace le point de fixation 4b associé. La connexion mécanique entre l'actionneur piézoélectrique 2 et le porte-miroir 4 est une connexion qui permet de pousser ou tirer le porte-miroir 4 pour faire tourner le miroir 5 dans un sens ou dans l'autre en fonction du sens de déformation de l'actionneur piézoélectrique 2.

Chaque actionneur piézoélectrique 2 est relié mécaniquement au porte-miroir 4 de sorte que la déformation de l'actionneur piézoélectrique 2 déplace un point de fixation 4b ce qui déplace la zone de support du porte-miroir 4 par rapport au bâti fixe 1 pour obtenir une composante de rotation autour du premier axe de rotation BB et éventuellement du deuxième axe de rotation CC. L'actionnement des actionneurs piézoélectriques 2 agit sur le porte-miroir 4 et entraine la rotation de la zone de support et donc la rotation du miroir 5. Les points de fixation 4b se déplacent par rapport au bâti selon la sollicitation appliquée par les actionneurs piézoélectriques 2.

Comme cela est illustré sur les différentes figures, le porte-miroir 4 peut être démontable par rapport au bâti fixe 1.

Le dispositif piézoélectrique comporte un convertisseur qui est configuré pour convertir les translations linéaires issues des déformations des actionneurs piézoélectriques 2 en au moins une rotation de la zone de support par rapport au bâti fixe 1. Le convertisseur peut être formé par des éléments qui sont distincts du porte-miroir 4 et/ou des zones du porte-miroir 4. Le convertisseur peut être formé par une ou plusieurs pièces. Le convertisseur peut être distinct du porte-miroir 4 ou monolithique avec le porte-miroir 4. Différentes configurations de convertisseur sont illustrées aux figures 2 à 16. Lorsque le convertisseur est distinct du porte-miroir 4, le convertisseur est préférentiellement fixé directement au porte-miroir 4 comme cela a été illustré. Comme illustré, le convertisseur n'est pas fixé directement au miroir 5 lorsque le convertisseur est distinct du porte-miroir 4.

Le dispositif piézoélectrique comporte un plot d'ancrage 6 qui est monté fixe sur le bâti fixe 1. Le plot d'ancrage 6 s'étend selon la première direction AA. Le plot d'ancrage 6 peut être utilisé pour monter fixement une partie du porte-miroir 4 et/ou des éléments du convertisseur par rapport au bâti fixe 1. Le plot d'ancrage 6 peut être amovible ou inamovible du bâti fixe 1.

Les inventeurs ont observé que dans les dispositifs de l'art antérieur, une partie des déformations présentes dans le miroir 5 après son montage sur le porte-miroir 4 sont dues à l'hyperstatisme introduit par la fixation du miroir 5 sur le porte-miroir 4. En effet, compte tenu des tolérances de fabrication, les points de support 5a du miroir 5 ne sont jamais strictement à la même côte que les point de support 4a, notamment suivant la direction AA. L'écart dans les côtes entraine un jeu de contraintes dans le miroir 5 lors de la fixation rigide sur le porte-miroir 4.

Lorsque le miroir 5 est fixé au porte-miroir 4 par quatre points de support 4a, la configuration est, par définition, hyperstatique et un défaut de planéité dans les points de support 4a du porte-miroir 4 et/ou dans les points de support 5a du miroir 5 entraine, lors de la fixation, la génération d'un jeu de contraintes. Le porte-miroir 4 étant beaucoup plus rigide que le miroir 5, les contraintes sont majoritairement introduites dans le miroir 5 qui finit par se déformer.

Dans une configuration à trois points de support 4a et trois points de support 5a, il apparait également une situation d'hyperstatisme car les points de support 4a/5a ne sont pas ponctuels. Les points de supports sont des surfaces plus ou moins étendues. Lorsque les surfaces des points de supports 4a et 5a ne définissent pas un même plan, des jeux de contraintes sont introduits lors de la fixation qui finissent par déformer le miroir 5.

A la différence du porte-miroir rigide de l'art antérieur, il est proposé différentes configurations d'un porte-miroir 4 déformable. Le porte-miroir 4 possède au moins un des points de support 4a qui est monté mobile selon la première direction AA par déformation d'une partie du porte-miroir 4, de préférence par déformation élastique du porte-miroir 4. Un des points de support 4a est monté mobile indépendamment des autres points de support 4a afin de mieux adapter la position des points de support 4a du porte-miroir 4 à la position des points de support 5a du miroir 5 et ainsi réduire le jeu de contraintes introduit dans le miroir 5.

Il est particulièrement avantageux qu'au moins deux points de support 4a soient montés mobiles indépendamment entre eux et par rapport aux autres de manière à mieux s'adapter aux positions des points de support 5a. Les deux points de support 4a peuvent être montés mobiles selon la première direction AA. De manière encore plus préférentielle, chaque point de support 4a est monté mobile indépendamment des autres au moins selon la première direction AA. Il est alors plus facile d'adapter communément la position des points de support 4a et 5a entre eux.

Le ou les points de support 4a sont montés mobiles indépendamment des autres en l'absence de fixation du miroir 5. Lors de la fixation du miroir 5, les points de support 4a deviennent fixes les uns par rapport aux autres.

Le déplacement des points de support 4a les uns par rapport aux autres s'effectue par déformation élastique du porte-miroir 4, par exemple au moyen d'une liaison à ressort ou au moyen d'une rondelle déformable élastiquement et disposée entre un point de support 4a du porte-miroir 4 et un point de support 5a du miroir 5. La déformation du ressort ou de la rondelle permet une meilleure adaptation. Cependant, il ressort que cette configuration n'est pas la plus intéressante car elle nécessite d'introduire une pièce additionnelle ce qui peut être une source d'erreur lors du montage.

De manière particulièrement avantageuse, le point de support 4a, les points de support 4a ou chaque point de support 4a sont montés mobiles par rapport au reste du porte-miroir 4 au moyen d'une platine 4c fixée par une liaison en flexion 4d. Une telle configuration permet un réglage aisé entre les points de support 4a et les points de support 5a avec une adaptation automatique et ajustée.

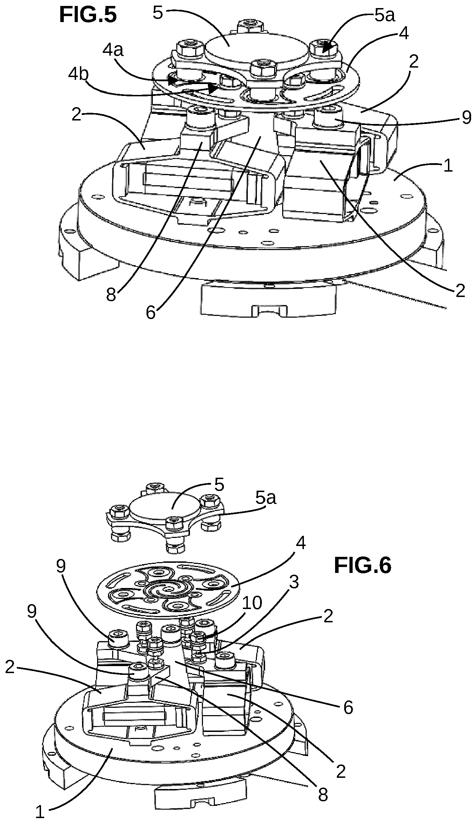

Lors de la fixation du miroir 5 avec le porte-miroir 4, les points de support 4a se déplacent jusqu'à venir en contact des points de support 5a et ainsi s'adapter à la configuration du miroir 5. Le miroir 5 est alors monté fixement sur le porte-miroir 4. Le miroir 5 se déplace en fonction des déplacements des points de support 4a. Dans les modes de réalisation illustrés, la direction AA passant par le centre O du porte-miroir 4 est confondue avec la direction de l'axe optique du miroir 5 lorsque ce dernier est dans sa position de repos, c'est-à-dire lorsque les actionneurs piézoélectriques 2 ne sont pas sollicités, comme cela est représenté à la figure 2 ou à la figure 5.

La liaison en flexion 4d se déforme élastiquement ce qui permet d'adapter la position des points de support 4a du porte-miroir 4 à la position des points de support 5a du miroir 5. La forme de la platine 4c et/ou de la liaison en flexion 4d seront choisies judicieusement pour s'adapter au mieux aux contraintes du miroir 5. Dans le cas d'un miroir plan, cela assure le maintien de la planéité de sa surface réfléchissante 5b et donc une réduction des erreurs de front d'onde.

Après fixation, le miroir 5 définit une liaison mécanique plus rigide entre les différents points de support 4a du porte-miroir 4. Le miroir 5 limite la mobilité des points de support 4a. De cette manière, le comportement du porte-miroir 4 est différent selon que le miroir 5 est fixé ou non-fixé au porte-miroir 4. Le ou les points de support 4a qui sont initialement mobiles par rapport aux autres deviennent fixes entre eux. La position des points de support 4a du porte-miroir 4 est définie par le miroir 5 pour adapter les écarts dimensionnels. Une fois fixé au porte-miroir 4, le miroir 5 est apte à pivoter autour du premier axe de rotation BB et/ou du deuxième axe de rotation CC en fonction des déformations appliquées sur les actionneurs piézoélectriques 2 de manière identique ou sensiblement identique à un porte-miroir de l'art antérieur tel que celui illustré à la figure 1.

L'utilisation d'un point de support 4a monté mobile en flexion permet également d'avoir un point de support qui est mobile par rapport aux points de fixation 4b. La liaison en flexion 4d qui intervient dans la liaison mécanique reliant le point de support 4a au point de fixation 4b permet de filtrer une partie des vibrations et de mieux préserver l'intégrité mécanique du miroir 5 vis-à-vis des chocs et vibrations induits par le bâti fixe 1.

Différentes configurations de points de support 4a mobiles entre eux et mobiles par rapport aux points de fixations 4b sont illustrées aux figures 2 à 14.

L'utilisation d'un porte-miroir 4 qui est déformable va l'encontre des enseignements de l'art antérieur qui proposent un porte-miroir 4 infiniment rigide pour assurer une bonne efficacité des actionneurs piézoélectriques 2. L'utilisation d'un porte-miroir 4 qui est déformable permet de former un porte-miroir 4 plus mince et donc moins lourd que ceux de l'art antérieur. Le gain de masse à déplacer permet de réduire la taille des actionneurs piézoélectriques 2 et la consommation électrique.

Les inventeurs ont également observé que dans les dispositifs de l'art antérieur, une partie des déformations apparait dans le miroir 5 lors de variations de température. Cette déformation est due à la différence de dilatation entre le porte-miroir 4 et le miroir 5 qui sont réalisés dans des matières différentes, comportant des coefficients de dilatation différents. Lors de variations de température le porte-miroir 4 rigide de l'art antérieur se dilate plus que le miroir, et impose sa déformation au miroir 5 qui est plus souple, et se déforme.

Pour former des platines 4c montées mobiles en flexion dans un porte-miroir 4 sous la forme d'une plaque, il est avantageux d'utiliser des premières fentes 4f. Dans un mode de réalisation particulier illustré aux figures 2 à 8, le porte-miroir 4 possède des platines 4c possédant chacun un point de support 4a. Les platines 4c sont terminées par la liaison en flexion 4d qui fixe la platine 4c au reste du porte-miroir 4. Les formes des platines 4c et des liaisons en flexion 4d sont définies par des premières fentes 4f qui traversent le porte-miroir 4 selon la direction AA. La forme et la position des premières fentes 4f permettent de définir la déformation autorisée pour chaque liaison en flexion 4d et donc le déplacement possible pour chaque point de support 4a selon la première direction AA.

Dans le mode de réalisation illustré, les premières fentes 4f qui définissent les platines 4c et les liaisons en flexion 4d pour les points de support 4a se présentent sous la forme d'une découpe qui fait le tour de chaque point de support 4a à l'exception de la ou des liaisons en flexion 4d pour maintenir une liaison mécanique.

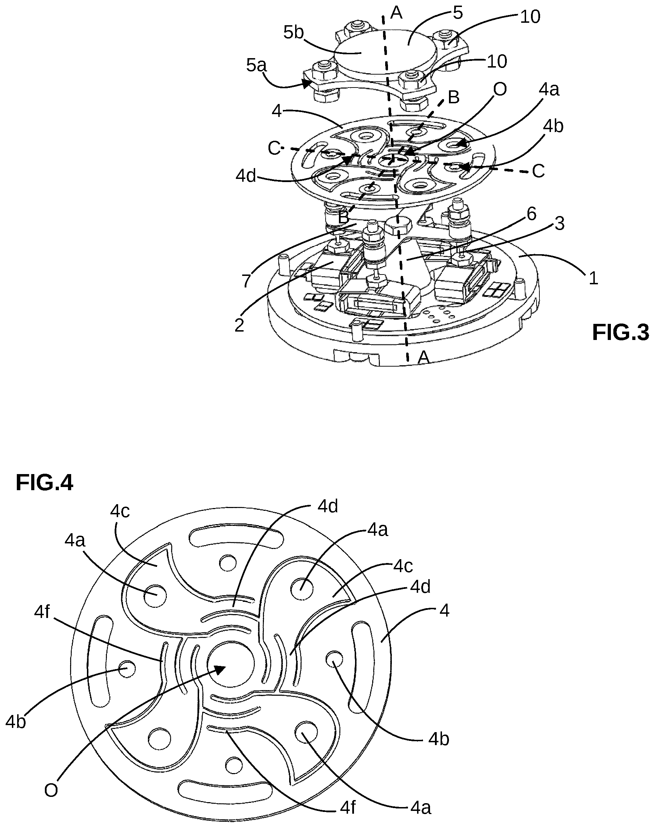

Comme illustré aux figures 4, 8, 13, 14 et 15, il est particulièrement avantageux de définir des premières fentes 4f qui séparent chaque point de support 4a des autres points de support 4a, l'observation étant réalisée en traçant une ligne droite entre chaque couple de deux points de support 4a mobiles indépendamment l'un de l'autre. Il est également avantageux de définir des premières fentes 4f de telle sorte qu'elles séparent chaque point de support 4a et le centre O du porte miroir 4 comme cela est illustré à la figure 4, l'observation étant réalisée en traçant une ligne droite entre chaque point de support 4a et le centre O. Il est également avantageux de définir des premières fentes 4f qui séparent chaque point de support 4a et ses deux points de fixation 4b les plus proches lorsque l'on trace une ligne droite imaginaire entre le point de support 4a et le point de fixation 4b considéré.

A la différence du porte-miroir rigide de l'art antérieur il est proposé également différentes configurations de porte-miroir déformables, qui permettent à la fois d'obtenir des points de support miroirs mobiles entre dans la direction AA, et aussi dans les directions BB et CC, pour permettent au support miroir de se dilater dans les directions BB et CC sans déformer le miroir lors de variations de température.

Pour former un porte-miroir 4 déformable, il est avantageux d'utiliser un porte miroir 4 qui se présente sous la forme d'une plaque. La dimension de la plaque est beaucoup plus importante selon les axes de rotation BB et CC que selon la direction AA, par exemple au moins cinq fois plus importante, voire au moins dix fois plus importante. De manière préférentielle, le porte-miroir 4 est réalisé par une plaque de métal de faible épaisseur, de préférence inférieure à 3mm, préférentiellement inférieure à 2mm et encore plus préférentiellement inférieure à 1mm. La faible épaisseur de la plaque permet de réduire la masse du porte-miroir 4. En réduisant la masse du porte-miroir 4, une force réduite appliquée par l'actionneur piézoélectrique 2 permet de faire tourner le porte-miroir 4.

Afin de réduire plus efficacement les déformations induites dans le miroir 5, il est avantageux de réduire autant que possible l'introduction d'un jeu de contraintes à cause de la dilatation différentielle entre le miroir 5 et le porte-miroir 4. Il est avantageux qu'au moins un point de support 4a soit mobile par rapport aux autres points de support 4a selon une direction perpendiculaire à la première direction AA. Préférentiellement au moins deux voire tous les points de support 4a sont mobiles indépendamment les uns des autres selon au moins une direction perpendiculaire à la première direction AA.

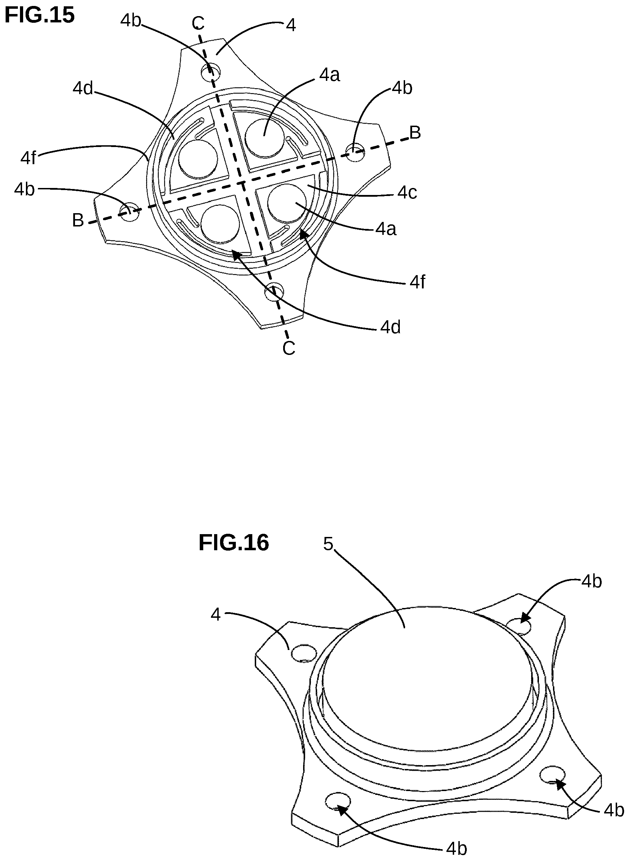

Dans un mode de réalisation particulier illustré dans la figure 15, les platines 4c recevant les points de support 4a sont montées mobiles selon la première direction AA au moyen des premières fentes 4f. il est avantageux que les premières fentes 4f permettent d'avoir un déplacement des points de support 4a selon les directions BB et CC. Dans le mode de réalisation illustré à la figure 15, les points de support 4a étant prévus pour fournir des surfaces de collage pour coller un miroir 5, illustré en figure 16.

Il est également avantageux que la mobilité du point de support 4a selon la au moins une direction perpendiculaire à la première direction AA soit obtenue par déformation élastique du porte-miroir 4 pour que le porte-miroir 4 s'adapte continûment et automatiquement à la position du point de support 5a en fonction de l'évolution de la température. Une telle configuration de porte-miroir 4 permet de mieux s'adapter aux problématiques d'hyperstatisme et/ou de dilatation différentielle.

Il est avantageux que les points de support 4a soient disposés à équidistance d'un centre O du porte-miroir 4. Plus préférentiellement les points de support 4a sont régulièrement réparties le long d'un cercle imaginaire qui passe par tous les points de support 4a et de centre O pour mieux compenser les dilatations différentielles. Il existe un décalage égal à 90° lorsque quatre points de support 4a sont utilisés ou égal à 120° pour trois points de support 4a. Cette configuration est illustrée aux figures 2 à 16.

Dans une telle configuration, afin de mieux maitriser la position du miroir 5 par rapport au porte-miroir 4 et les contraintes induites lors des évolutions de température, il est préférable que la platine 4c se déplace aussi selon une composante radiale. La liaison en flexion 4d et/ou la platine 4c autorisent un déplacement du point de support 4a selon une composante radiale. Par exemple, suivant la figure 4, la liaison en flexion 4d s'étend sous la forme d'un arc de cercle autour du centre O. En alternative ou en complément, la platine 4c comporte des découpes en arc de cercle autour du centre O. Lorsque la température évolue, la dilatation différentielle applique des contraintes sur les découpes qui se déforment. Avec de telles découpes les points de support 4a et les points de support 5a se déplacent légèrement dans une direction radiale, perpendiculairement à la direction AA et qui passe par le centre O. Cela permet de mieux conserver la planéité du miroir 5 et de réduire les erreurs de front d'onde, sur une plus grande gamme de températures.

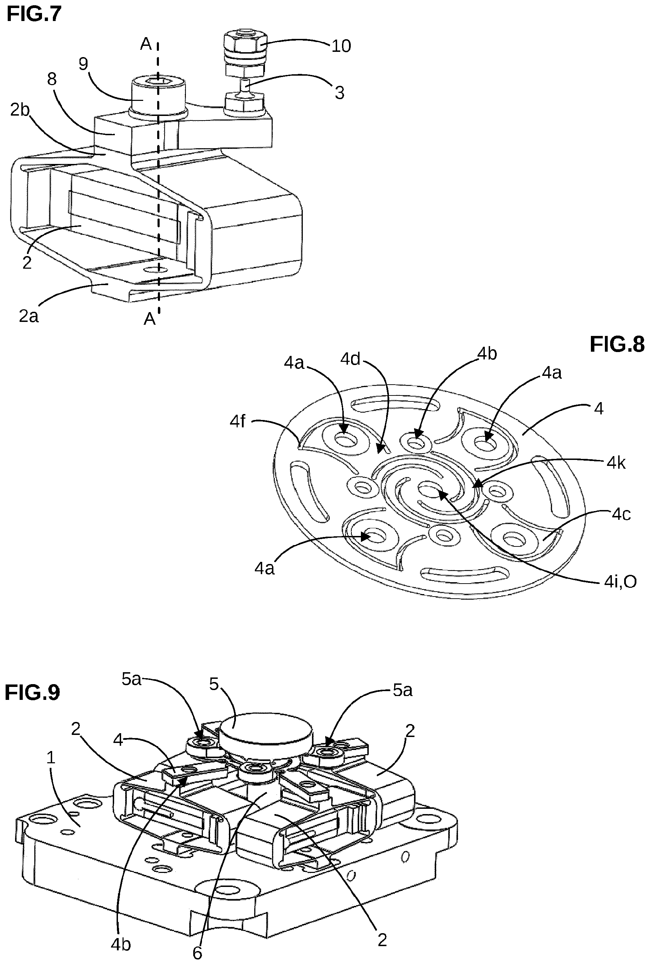

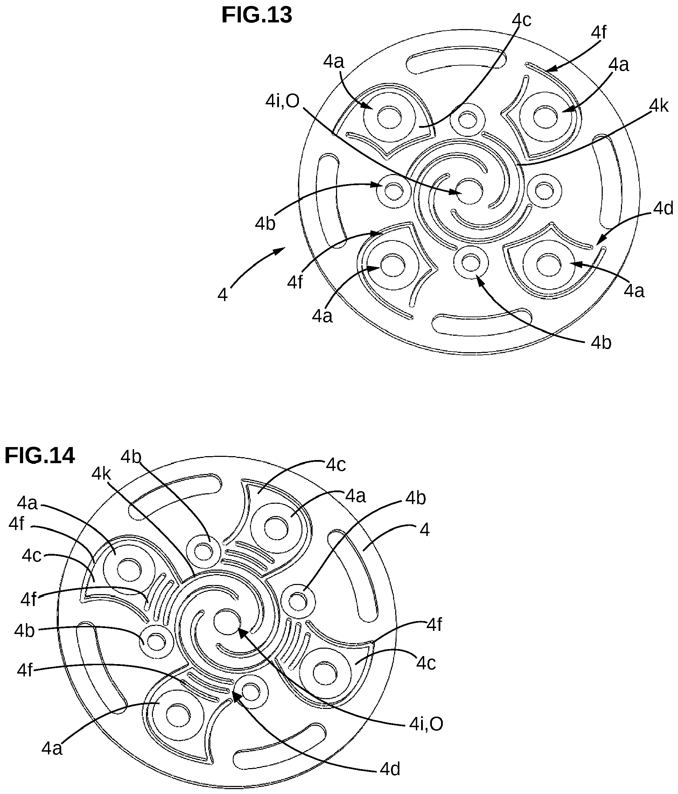

Différentes configurations sont possibles pour définir un déplacement d'un point de support 4a selon la composante radiale. La figure 4 illustre une platine 4c dont la zone de flexion 4d qui fixe la platine 4c au reste du porte-miroir 4 se présente sous la forme d'un arc de cercle de centre O. Préférentiellement, les multiples platines 4c possèdent des arcs de cercle équivalents, c'est-à-dire de même rayon, de même centre et de même arc angulaire. Les figures 13, 14 et 15 présentent d'autres configurations de porte-miroir 4 où la conformation de la platine 4c associée à la conformation de la zone de flexion 4d facilite l'obtention d'un déplacement radial du point de support 4a lorsqu'il est fixé au miroir 5. Par exemple, la liaison en flexion 4d illustrée à la figure 8 peut être modifiée pour former une liaison en flexion 4d en arc de cercle comme cela est illustré à la figure 14.

Les figures 9 à 11 présentent une autre réalisation avec une platine 4c montée sur un bras 4g s'étendant en spirale depuis le centre O et dont la liaison en flexion 4d permet également une torsion dans un plan perpendiculaire à la première direction AA pour permettre au point de support 4a de se déplacer radialement en relation avec la déformation du bras 4e en spirale qui support la platine 4c. Le bras 4g s'étend principalement dans un plan perpendiculairement à la première direction AA, de préférence selon au moins une direction.

De manière préférentielle, au moins une première liaison en flexion 4d est formée par une pluralité de premières fentes 4f qui définissent des arcs de cercle autour du centre O du porte-miroir 4. De telles premières fentes 4f permettent de former une liaison en flexion 4d avec une composante radiale comme définie plus haut.

Il est également avantageux que deux premières fentes 4f, servant à définir une liaison en flexion 4d pour un point de support 4a, soient issues d'un même trait de coupe, c'est-à-dire correspondent au prolongement d'une même découpe dans la matière. Il est également avantageux qu'un arc de cercle soit en continuité de trait de coupe avec au moins un arc de cercle de préférence avec deux arcs de cercle de la liaison en flexion 4d adjacente. Une telle configuration permet une meilleure maitrise de la flexion ainsi que l'introduction d'une déformation en torsion pour la platine 4c.

Il est préférable que la ou les liaisons en flexion 4d associées à chaque point de support 4a soient disposées plus proches du centre O du porte-miroir 4 que le point de support 4a correspondant, lors d'une observation selon la première direction AA comme cela est illustré aux figures 4, 8, 11, 12, 13 et 14. La distance est mesurée en ligne droite entre le centre O et le point de support 4a. Une telle configuration permet d'avoir un déplacement des points de support 4a mieux adapté à la compensation de la dilatation différentielle. Cependant, une configuration inverse est possible voire préférable lorsque le miroir 5 est de grande dimension, par exemple lorsqu'il s'étend au-delà du porte-miroir 4 comme cela est illustré à la figure 13 ou 15.

Dans un mode de réalisation préférentiel illustré aux figures 8, 12, 13 et 14, les points de support 4a sont disposés plus loin du centre O du porte-miroir 4 que les points de fixation 4b dans une observation selon la première direction AA, de manière radiale. Par ce moyen, un déplacement des points de fixation 4b produit par les actionneurs piézoélectriques 2, de préférence en mode push-pull, engendre un débattement angulaire plus élevé du miroir 5 que si ce même déplacement était appliqué sur les points de support 4a. Ainsi il est possible d'utiliser des actionneurs 2 plus petits que ceux qui seraient nécessaires pour un actionnement des points de support 4a. Il y a donc un intérêt à avoir les points de fixation 4b les plus près possibles du centre O du porte-miroir 4 pour avoir une amplitude de rotation la plus importante possible pour le miroir 5. Le mode de réalisation illustré à la figure 4 représente des points de fixation 4b qui sont plus loin du centre O que les points de support 4a, mais il est possible d'utiliser une configuration inversée.

Cependant, plus les points de fixation 4b sont proches du centre O et plus les actionneurs piézoélectriques 2 doivent être compacts pour pouvoir être installés dans un volume réduit, pour une déformation fixe selon la direction AA afin d'obtenir une rotation importante du porte-miroir 4.

Afin d'augmenter l'amplitude de la rotation de la zone de support pour une translation prédéfinie d'un ou de plusieurs des actionneurs piézoélectriques 2, il est avantageux de rapprocher autant que possible les points de fixation 4b du centre O du porte-miroir 4 ou de l'axe central parallèle à la direction AA et passant par le centre O. Cependant, si l'on conserve une configuration dans laquelle les actionneurs piézoélectriques 2 sont dans le prolongement des points de fixation 4b selon la direction AA, cela revient à rapprocher les actionneurs piézoélectriques les uns des autres et donc à générer un problème d'encombrement pour installation des actionneurs piézoélectriques 2.

Il est particulièrement avantageux de prévoir qu'au moins un des actionneurs piézoélectriques 2 et préférentiellement tous les actionneurs piézoélectriques 2 soient surmontés par une barre 8 fixée à la partie sommitale de l'actionneur piézoélectrique 2 comme cela est illustré à la figure 7 et dans le dispositif piézoélectrique présenté aux figures 5 et 6. La barre 8 s'étend perpendiculairement à la première direction AA et de manière radiale par rapport à l'axe central. La barre 8 se déplace selon la première direction AA de manière identique au déplacement produit par la déformation de l'actionneur piézoélectrique 2 selon la première direction AA. La barre 8 est rigide afin de limiter sa flexion et ainsi maintenir une efficacité importante sur la rotation du miroir 5. L'extrémité de la barre 8 la plus proche du centre O peut être fixée directement ou indirectement au porte-miroir 4 selon les configurations. Dans le mode de réalisation particulier illustré à la figure 7, l'extrémité déportée de la barre 8 est surmontée par une tige de flexion 3. La première extrémité de la tige de flexion 3 est fixée à la barre 8 par un dispositif de fixation, par exemple une vis 9 et la deuxième extrémité de la tige de flexion 3 est fixée au point de fixation 4b, par exemple par une vis.

Les figures 5 et 6 illustrent un mode de réalisation utilisant les actionneurs piézoélectriques 2 munis des barres 8 dirigées vers le centre de la structure. Une solution technique équivalente peut être appliquée dans le mode de réalisation illustré à la figure 2 ou dans celui illustré à la figure 9. Cela permet d'utiliser des actionneurs piézoélectriques 2 plus importants sans avoir un problème d'encombrement à proximité du plot d'ancrage 6.

Les points de fixation 4b reçoivent les sollicitations mécaniques provenant des actionneurs piézoélectriques 2. Afin d'avoir une bonne maîtrise de l'angle de la rotation du miroir 5 pour une translation prédéfinie d'un actionneur piézoélectrique 2, il est intéressant d'avoir une liaison mécanique rigide avec les zones de flexion 4d des points de support 4a et de préférence la plus rigide possible entre les points de fixation 4b. La liaison mécanique rigide est configurée pour que les points de fixation 4b soient montés immobiles les uns par rapport aux autres ou sensiblement immobiles les uns par rapport aux autres.

Dans un mode de réalisation particulier illustré aux figures 2 à 8, le porte-miroir 4 se présente sous la forme d'une plaque dont le dessin externe définit un disque ou un polygone connexe. La zone périphérique externe de la plaque est continue et relie continûment tous les points de fixation 4b afin de former une liaison mécanique aussi rigide que possible sans trop alourdir le porte-miroir 4. Cette configuration permet de former facilement et avec un faible surpoids des points de fixation 4b immobiles ou quasi-immobiles entre eux.

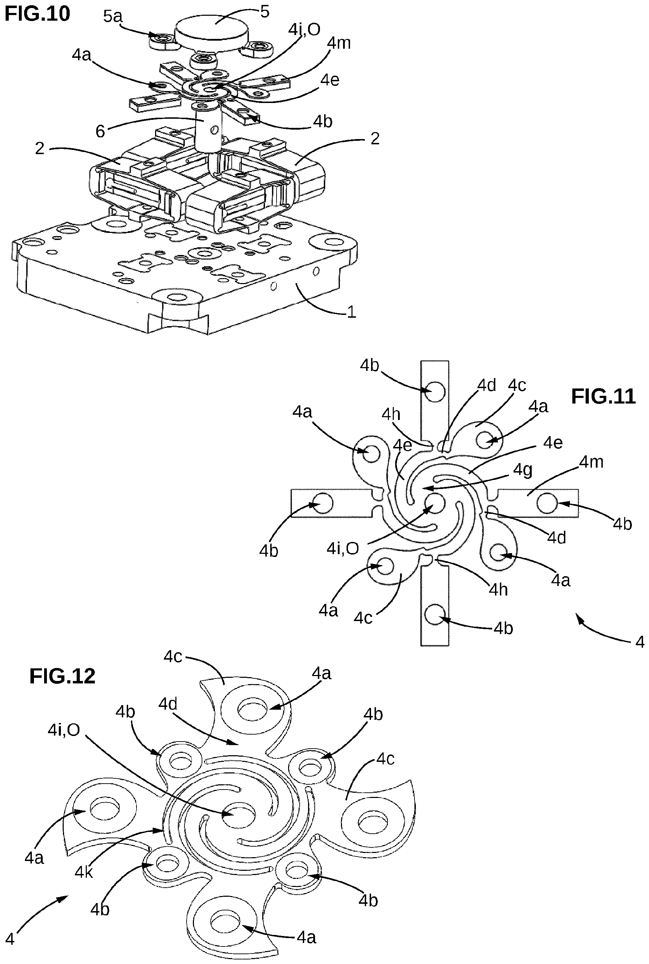

En alternative illustrée à la figure 12, le porte-miroir 4 peut être dépourvu de la zone rigide périphérique. Les points de fixation 4b sont maintenus fixement les uns aux autres par d'autres moyens, par exemple un épaississement localisé du porte-miroir 4. La figure 12 reprend sensiblement la forme du porte-miroir 4 de la figure 4 dont la zone périphérique a été supprimée.

Dans un autre mode de réalisation, le porte-miroir 4 est sous la forme d'une plaque qui est dépourvue de portion périphérique annulaire continue et les points de fixation 4b sont disposés mobiles les uns par rapport aux autres. Dans ce mode de réalisation, pour profiter efficacement des efforts appliqués par les actionneurs piézoélectriques 2, il est préférable d'avoir autant de points de support 4a que de points de fixation 4b. Le porte-miroir 4 comporte plusieurs bras 4e montés mobiles en flexion et chaque bras 4e possède une platine 4c avec son point de support 4a et un point de fixation 4b comme cela est illustré aux figures 9 à 11.

Dans le mode de réalisation illustré aux figures 9 à 11, le porte-miroir 4 possède un point d'ancrage 4i monté immobile par rapport au bâti fixe 1. Le point d'ancrage 4i peut être monté fixement au moyen du plot d'ancrage 6. Il est particulièrement avantageux que le point d'ancrage 4i soit le centre O pour faciliter la réalisation du porte-miroir 4 et l'utilisation du dispositif piézoélectrique. Des bras 4e s'étendent depuis le point d'ancrage 4i et sont mobiles en flexion à partir du point d'ancrage 4i au moins selon la première direction AA. Chaque point de fixation 4b est fixé à un actionneur piézoélectrique 2. De manière préférentielle, le point de fixation 4b est fixé directement à un actionneur piézoélectrique 2 pour être sollicité en translation selon la direction AA. Le bras 4e est monté en flexion au moyen d'une liaison fléchissante 4g.

Afin d'avoir une plus grande efficacité, le point de fixation 4b est formé sur une platine additionnelle 4m qui est très rigide. La platine additionnelle 4m peut être localement renforcée pour augmenter sa raideur en comparaison du bras 4e. Il est possible de prévoir une épaisseur plus importante du matériau formant le porte-miroir 4 ou de rajouter un élément rigide par soudure, collage, vissage, rivetage ou tout autre technique adaptée pour limiter la déformation de la platine additionnelle 4m en comparaison du bras 4e selon la première direction AA. La platine additionnelle est connectée au bras 4e par une liaison mécanique déformable 4h de préférence une liaison en torsion pour faciliter le déplacement en flexion du bras 4e et une translation linéaire selon la direction AA du point de fixation 4b.

Le point de support 4a est relié au bras 4e par la liaison en flexion 4d. Le point de fixation 4b est relié au bras 4e par la liaison mécanique déformable 4h. Les deux liaisons 4d et 4h travaillent dans leur domaine de déformation élastique. Les deux liaisons 4d et 4h assurent que les points de support 4a soient mobiles entre eux (en l'absence du miroir) et que les points de fixation 4b soient mobiles entre eux. Les deux liaisons 4d et 4h assurent que, pour un bras 4e, le point de fixation 4b soit mobile par rapport au point de support 4a. La mobilité entre les points de fixation 4b permet de mieux accommoder un hyperstatisme provenant des actionneurs piézoélectriques 2. Des légères différences de hauteur (selon la première direction AA) sont compensées par le porte-miroir 4 sans que cela n'empêche, ni ne limite la plage angulaire du porte-miroir 4 dans ses rotations. Une meilleure accommodation de l'hyperstatisme permet de relâcher des contraintes dimensionnelles de fabrication sur les actionneurs piézoélectriques 2 et ainsi réduire les coûts de fabrication.

Les points de support 4a et les points de fixation 4b sont mobiles par rapport au point d'ancrage 4i. Les bras 4e sont flexibles et se déforment en fonction de la sollicitation imposée par chaque actionneur piézoélectrique 2. La sollicitation d'un point de fixation 4b par un actionneur piézoélectrique 2 entraine le déplacement du point de fixation 4b et donc le déplacement du bras 4e monté flexible. Cela entraine le déplacement du point de support 4a et fait pivoter le miroir 5.

Il est particulièrement avantageux de former la liaison en flexion 4d ainsi que la liaison mécanique 4h par amincissement localisé.

Dans un mode de réalisation particulier, la zone en flexion 4d est disposée après la liaison mécanique 4h, le long du sens d'extension du bras 4e depuis le point d'ancrage 4i vers l'extrémité opposée. Cette configuration est avantageuse car elle permet d'avoir un décalage angulaire du point de support 4a plus important en comparaison de la configuration inverse ou d'un actionnement direct sur le point de support 4a. De manière encore plus avantageuse, la liaison en torsion 4h est disposée plus près du centre O que la liaison en flexion 4d, le long de la direction d'extension du bras 4e depuis le centre O jusqu'à l'extrémité opposée. Il est préférable que la liaison en torsion 4h soit disposée plus près du centre O que le point de support 4a du même bras, dans une observation selon la première direction AA. La distance est mesurée en ligne droite.

Dans un mode de réalisation avantageux, les bras 4e s'étendent sous la forme de spirales à partir du point d'ancrage 4i. La forme en portions de spirale des bras 4e permet d'augmenter leur longueur effective reliant le point d'ancrage 4i aux points de fixation 4b, pour augmenter la gamme angulaire accessible pour la rotation du miroir 5.

Ce mode de réalisation est particulièrement avantageux car il autorise la fixation directe du porte-miroir 4 aux actionneurs piézoélectriques 2 et à un plot d'ancrage 6 ainsi que la fixation directe du miroir 5 au porte-miroir 4. Le porte-miroir 4 pouvant être sous la forme d'une plaque, cela permet de réaliser une configuration plus compacte que les configurations de l'art antérieur selon la première direction AA ainsi qu'une configuration moins lourde et avec moins de pièces.

Le mode de réalisation illustré aux figures 9 à 11 permet facilement d'écarter les actionneurs piézoélectriques 2 plus loin du centre O ce qui réduit les contraintes d'encombrement liées à l'intégration des multiples actionneurs piézoélectriques 2. Les points de fixation 4b s'étendent à partir des bras 4e en spirale selon des directions radiales en s'éloignant du centre O. Pour conserver une efficacité importante de la rotation, il est préférable que la platine additionnelle 4m qui comporte le point de fixation 4b jusqu'à la liaison mécanique 4h soit très rigide de sorte que la translation linéaire appliquée par l'actionneur piézoélectrique 2 soit sensiblement identique entre la liaison mécanique 4a et l'actionneur piézoélectrique 2.

Il est avantageux que le porte-miroir 4 possède une symétrie axiale dont l'axe de symétrie est parallèle à la première direction AA. Il est également avantageux que le porte-miroir 4 présente une symétrie rotationnelle, par exemple de rotation à 90° ou 120°.

Il est avantageux d'utiliser quatre actionneurs piézoélectriques 2 au lieu de trois actionneurs piézoélectriques 2 car cela facilite la gestion de la rotation du porte-miroir 4 autour de deux axes de rotation BB et CC.

Les actionneurs piézoélectriques 2 se déforment pour définir une translation linéaire entre une première extrémité 2a et une deuxième extrémité 2b. La translation linéaire est observée selon la première direction AA. La première extrémité 2a est montée fixement sur le bâti fixe 1, la déformation de la deuxième extrémité 2b est une translation linéaire qui est principalement orientée selon la première direction AA. La déformation de l'actionneur piézoélectrique 2 se traduit par un rapprochement ou un éloignement entre la première extrémité 2a et la deuxième extrémité 2b selon la première direction AA. Différentes configurations d'actionneurs piézoélectriques 2 sont possibles, mais il est avantageux d'utiliser les configurations décrites dans les documents US6927528 et FR2740276. L'actionneur piézoélectrique possède un barreau en matériau piézoélectrique. L'utilisation de la barre permet de déplacer le point d'actionnement plus près du centre O que du barreau piézoélectrique dans une observation selon la première direction AA.

Un convertisseur transformant la translation linéaire de la deuxième extrémité 2a en une rotation d'un des points de support 4a peut être obtenue de différentes manières. Dans les modes de réalisation illustrés aux figures 2 à 6, une tige de flexion 3 relie un actionneur piézoélectrique 2 et un point de fixation 4b. La tige de flexion 3 est configurée pour se déformer en flexion et ainsi transformer le déplacement en translation de la deuxième extrémité 2a en une rotation du point de fixation 4b associé. Afin de faciliter l'obtention du mouvement de rotation, le point de fixation 4b est également fixé à un fléchisseur qui se présente sous la forme d'un bras dont une extrémité est montée fixement au point de fixation 4b et l'autre extrémité est montée fixement au bâti fixe 1, de préférence au plot d'ancrage 6. Préférentiellement, ce montage est réalisé pour chaque actionneur piézoélectrique 2. Les fléchisseurs peuvent être montés ensemble sous la forme d'une pièce formant un palier flexible 7. Dans le mode de réalisation illustré aux figures 2 à 4, le porte-miroir 4 n'est pas fixé directement au bâti fixe 1. Dans ce mode de réalisation, le convertisseur est formé par le palier flexible 7 et les tiges de flexion.

Dans un autre mode de réalisation illustré aux figures 5 à 8, les tiges de flexion 3 relient les actionneurs piézoélectriques 2 et les points de fixation 4b. Une portion d'ancrage 4i formant également le centre O du porte-miroir 4 immobilise le centre O par rapport au bâti-fixe 1. Dans ce mode de réalisation où les fléchisseurs ne sont pas utilisés, il est préférable de structurer le porte-miroir 4 afin de le rendre plus flexible que dans la configuration illustrée à la figure 2 et ainsi mieux adapter l'inclinaison du point de fixation 4b à la déformation de la tige de flexion 3. Il est particulièrement avantageux de former des deuxièmes fentes traversantes 4k telles que des découpes qui s'étendent sous la forme de spirales depuis la zone d'ancrage 4i vers les points de fixation 4b. Les deuxièmes fentes traversantes 4k en forme de spirales permettent de réduire la raideur en flexion du porte-miroir entre les points de fixation 4b et le point d'ancrage 4i.

Enfin dans un autre mode de réalisation illustré aux figures 9 à 11, le convertisseur est intégralement formé dans le porte-miroir 4 de sorte que les actionneurs piézoélectriques 2 peuvent être directement fixés au porte-miroir 4.

Avantageusement, les actionneurs piézoélectriques 2 sont des actionneurs piézoélectriques amplifiés, basés sur un empilement piézoélectrique et une coque amplificatrice possédant une deuxième extrémité 2b fixées par vissage à un point de fixation 4b.

Dans le mode de réalisation illustré à la figure 7, l'actionneur piézoélectrique 2 possède une barre 8 montée amovible et fixée au moyen d'une vis 9. Dans le mode de réalisation illustré aux figures 9 à 11, la vis 9 est destinée à se visser dans l'extrémité 2b de l'actionneur piézoélectrique 2 pour fixer le porte-miroir 4 sur l'actionneur piézoélectrique 2. La vis 9 passe à travers le trou formant le point de fixation 4b. Les figures 2, 3, 5 et 6 illustrent l'utilisation du boulon 10 pour fixer le miroir 5 sur le porte-miroir 4. Les boulons 10 peuvent être utilisés pour le mode de réalisation des figures 9 à 11. Dans les modes de réalisation illustrés aux figures 2 à 7, la tige de flexion 3 est terminée par une section filetée associée avec au moins un écrou pour fixer le porte-miroir 4 à l'extrémité de la tige de flexion 3.

Les points de support 4a et les points de fixation 4b assurent la formation d'une liaison mécanique avec le porte-miroir 4. Ils peuvent posséder des trous traversants lisses ou filetés, des trous non-traversants filetés, des zones saillantes filetées, des méplats destinés à des liaisons collées, ou tout autre moyen qui permet la fixation avec le porte-miroir 4. Il est avantageux d'utiliser des boulons pour fixer ensemble les différents éléments, afin d'assurer une bonne tenue mécanique en réponse à des vibrations externes. Dans les modes de réalisation illustrés, les points de fixation 4b et les points de support 4a possèdent des trous traversants dans le porte-miroir 4 par exemple pour le passage d'une vis ou d'un boulon 10.

De manière préférentielle, les actionneurs piézoélectriques 2 sont associés par paires et les actionneurs piézoélectrique 2 d'une paire sont disposés de manière opposée par rapport à une première direction AA qui passe par le centre de la zone de support et le cas échéant du miroir 5. Il est avantageux d'associer les actionneur piézoélectrique 2 par paires opposées par le circuit de commande, dans le but de produire un mode « push-pull » destiné à produire un mouvement de rotation à débattement limité du porte-miroir 4 et du miroir 5. Ce mode est obtenu en alimentant les deux actionneurs piézoélectriques 2 de la paire opposée par rapport la direction AA de telle sorte qu'un actionneur piézoélectrique 2 se dilate pendant que l'autre se contracte.

Il est avantageux de disposer deux points de fixation 4b alignés selon un axe de rotation BB et d'aligner deux autres points de fixation 4b selon un autre axe de rotation CC perpendiculaire au précédent. Pour faire pivoter la zone de support autour de l'axe de rotation BB, les deux actionneurs piézoélectrique 2 associés aux deux points de fixation 4b alignés selon l'axe CC sont actionnés dans des sens opposés selon la direction AA. L'un se contracte et l'autre se dilate. Pour faire pivoter la zone de support autour de l'axe de rotation CC, les deux actionneurs piézoélectrique 2 associés aux deux points de fixation 4b alignés selon l'axe BB sont actionnés dans des sens opposés selon la direction AA. L'un se contracte et l'autre se dilate.

Dans une configuration à trois actionneurs piézoélectriques, il est préférable de répartir régulièrement les actionneurs, c'est-à-dire avec un décalage angulaire égal à 120° tout autour de l'axe AA qui passe par le centre de la zone de support. Il est également avantageux de placer les points de fixation 4b à équidistance de l'axe AA qui passe par le centre de la zone de support et d'utiliser des actionneurs identiques. Une utilisation avantageuse du mode « push-pull » est possible en appliquant sur chaque actionneur d'une paire proche voisins une commande telle que leur course soit opposée et égale à la moitié de l'amplitude de la course de l'actionneur restant. Le centre du miroir est aligné avec le centre de la zone de support selon la direction AA.

La déformation d'un ou de plusieurs actionneurs piézoélectriques 2 suivant une translation linéaire selon la direction AA, par exemple en mode push-pull entraine le déplacement d'un ou de plusieurs points de fixation 4b ce qui induit une rotation du porte-miroir 4 au moyen du convertisseur. Cette rotation déplace la zone de support et donc les points de support 4a par rapport au bâti fixe 1. Le miroir 5 se déplace en rotation car il est immobile ou quasiment immobile par rapport au porte-miroir 4. L'introduction d'une flexibilité dans le porte-miroir 4 via les points de support 4a mobiles entre eux fait que les efforts introduits par les actionneurs piézoélectriques 2 ne sont pas ou quasiment pas appliqués à l'intérieur du miroir 5 ce qui limite la déformation du miroir 5 sans que cela empêche la maitrise de la rotation.

Le dispositif piézoélectrique se destine à des applications de pointage optique, telles que de la communication optique en espace libre, de la désignation, des scanners, de l'usinage laser ou de la chirurgie laser. Il s'agit d'applications embarquées ou en environnements sévères, rencontrées en secteur spatial, optronique, aéronautique, défense, industriel ou médical.

## Revendications

1. Dispositif piézoélectrique de pointage comprenant :
- un bâti fixe (1) ;
- des actionneurs piézoélectriques (2) fixés au bâti fixe (1), les actionneurs piézoélectriques (2) étant aptes à se déformer indépendamment les uns des autres selon une translation linéaire, chaque translation linéaire étant dirigée selon une première orientation (AA) ;
- un porte-miroir (4) destiné à recevoir et supporter un miroir (5) et réaliser la liaison mécanique entre les actionneurs piézoélectriques (2) et le miroir (5), le porte-miroir (4) définissant des points de fixation (4b) et au moins trois points de support (4a), les au moins trois points de support (4a) étant destinés à monter fixement un miroir (5) sur le porte-miroir (4), les au moins trois points de support (4a) étant distincts des points de fixation (4b), les au moins trois points de support (4a) définissant une zone de support montée mobile en rotation par rapport au bâti fixe (1) autour d'au moins un premier axe de rotation (BB), la première direction (AA) étant perpendiculaire audit au moins un premier axe de rotation (BB), chaque point de fixation (4b) étant relié fonctionnellement à un actionneur piézoélectrique (2) ;
- un convertisseur disposé dans au moins une liaison mécanique reliant les actionneurs piézoélectriques (2) et les points de support (4a) de sorte que la translation linéaire d'un ou de plusieurs des actionneurs piézoélectriques (2) entraine la rotation de la zone de support par rapport au bâti fixe (1) autour dudit au moins un premier axe de rotation (BB) ;
dispositif piézoélectrique **caractérisé en ce que** le porte-miroir (4) se présente sous la forme d'une plaque définissant les points de fixation (4b) et les au moins trois points de support (4a) et **en ce que** le porte-miroir (4) est déformable pour qu'au moins un des au moins trois points de support (4a) est un point de support (4a) monté mobile indépendamment des autres points de support (4a) dans la première direction (AA) par déformation élastique du porte-miroir (4), en l'absence du miroir (5).

2. Dispositif piézoélectrique de pointage selon la revendication 1, dans lequel chaque point de support (4a) est un point de support (4a) monté mobile indépendamment des autres points de support (4a) dans la première direction (AA) par déformation élastique d'une partie du porte-miroir (4), en l'absence du miroir (5).

3. Dispositif piézoélectrique de pointage selon la revendication 2, comportant une pluralité de platines (4c), chaque point de support (4a) étant monté sur une platine (4c), dans lequel chaque platine (4c) est fixée au reste du porte-miroir (4) par une liaison en flexion (4d) pour que chaque platine (4c) soit montée mobile indépendamment des autres platines (4c), selon la première direction (AA), en l'absence du miroir (5).

4. Dispositif piézoélectrique de pointage selon la revendication 3, dans lequel les points de support (4a) sont disposés à équidistance d'un centre (O) et dans lequel les liaisons en flexion (4d) sont disposées plus près du centre (O) que les points de support (4a) dans une observation selon la première direction (AA).

5. Dispositif piézoélectrique de pointage selon l'une quelconque des revendications 1 à 4, dans lequel les points de support (4a) sont disposés à équidistance d'un centre (O) et dans lequel les points de support (4a) sont plus éloignés du centre (O) que les points de fixation (4b).

6. Dispositif piézoélectrique de pointage selon l'une quelconque des revendications 1 à 5, dans lequel les points de support (4a) sont disposés à équidistance d'un centre (O) et dans lequel une partie sommitale d'au moins un des actionneurs piézoélectriques (2) comporte une barre (8) s'étendant selon une direction perpendiculaire à la première direction (AA) radialement par rapport au centre (O) pour que la connexion mécanique entre l'actionneur piézoélectrique (2) et le point de fixation (4b) associé soit plus proche du centre (O) que du barreau piézoélectrique de l'actionneur piézoélectrique (2), dans une observation selon la première direction (AA).

7. Dispositif piézoélectrique de pointage selon l'une quelconque des revendications 3 à 6, dans lequel les platines (4c) sont configurées pour se déplacer selon au moins une direction perpendiculaire à la première direction (AA).

8. Dispositif piézoélectrique de pointage selon la revendication 7, dans lequel les points de support (4a) sont disposés à équidistance d'un centre (O) et dans lequel la liaison en flexion (4d) est également configurée pour autoriser un déplacement radial des points de support (4a) perpendiculairement à la première direction (AA) et par rapport au centre (O).

9. Dispositif piézoélectrique de pointage selon la revendication précédente, comportant des platines additionnelles (4m), dans lequel le centre (O) est monté fixement par rapport au bâti fixe (1) au moyen d'un plot d'ancrage (6), et dans lequel des bras (4e) s'étendent depuis le centre (O), chaque bras (4e) étant fixé à une des platines (4c) par la liaison en flexion (4d), chaque bras (4e) étant fixé à une des platines additionnelles (4m) par une liaison en torsion (4h), la liaison en torsion faisant pivoter le bras (4e) par rapport à la platine additionnelle (4m) autour d'un axe perpendiculaire à la première direction (AA), chaque platine additionnelle (4m) recevant un point de fixation (4b).

10. Dispositif piézoélectrique de pointage selon la revendication précédente, dans lequel la liaison en torsion (4h) est disposée plus près du centre (O) que la liaison en flexion (4d), le long de la direction d'extension du bras (4e) depuis le centre (O) jusqu'à l'extrémité opposée.

11. Dispositif piézoélectrique de pointage selon l'une des revendications 9 et 10, dans lequel la liaison en torsion (4h) est disposée plus près du centre (O) que le point de support (4a), dans une observation selon la première direction (AA).

12. Dispositif piézoélectrique de pointage selon l'une quelconque des revendications 9 à 11, dans lequel les bras (4e) s'étendent sous la forme de spirales.

13. Dispositif piézoélectrique de pointage selon la revendication 12, dans lequel la liaison en flexion (4d) définit également une liaison en torsion autour d'un axe parallèle à la première direction (AA) et passant par la liaison en flexion (4d).

14. Dispositif piézoélectrique de pointage selon l'une des revendications 9 à 13 dans lequel le porte-miroir (4) est directement fixé à au moins un des actionneurs piézoélectriques (2) de sorte que le au moins un point de fixation (4b) se déplace selon une translation linéaire dans la première direction (AA).

15. Dispositif piézoélectrique de pointage selon la revendication précédente, dans lequel chaque actionneur piézoélectrique (2) est fixé directement à un des points de fixation (4b), chaque point de fixation (4b) appartenant à une platine additionnelle (4m) qui est plus rigide que le bras (4e) sur lequel la platine additionnelle est fixée (4m) par la liaison en torsion (4h).

16. Dispositif piézoélectrique de pointage selon la revendication 8, dans lequel chaque liaison en flexion (4d) possède une portion conformée en arc de cercle autour du centre (O).

17. Dispositif piézoélectrique de pointage selon l'une quelconques des revendications 3 à 8 et 16, dans lequel les points de support (4a) sont disposés à équidistance d'un centre (O), dans lequel le centre (O) est mobile par rapport à un plot d'ancrage (6) selon la première direction (AA), dans lequel le convertisseur possède un palier flexible (7) ayant une portion fixe montée fixement par rapport au bâti fixe (1) au moyen du plot d'ancrage (6) et des fléchisseurs s'étendant à partir de la portion fixe selon des directions perpendiculaires à la première direction (AA), les fléchisseurs étant montés fixement aux points de fixation (4b), dans lequel les actionneurs piézoélectriques (2) sont reliés aux points de fixation (4b) par des tiges de flexion (3) et dans lequel les points de fixation (4b) sont montés immobiles les uns par rapport aux autres dans le porte-miroir (4).

18. Dispositif piézoélectrique de pointage selon la revendication 17, dans lequel les platines (4c) et les liaisons en flexion (4d) sont définies par des premières fentes (4f) qui sont traversantes selon la première direction (AA) et dans lequel, dans une observation selon la première direction (AA), chaque ligne droite reliant un des points de support (4a) à un point de fixation (4b) enjambe au moins une des premières fentes (4f).

19. Dispositif piézoélectrique de pointage selon l'une quelconque des revendications 3 à 8 et 16, dans lequel les points de support (4a) sont disposés à équidistance d'un centre (O) et dans lequel le centre (O) est monté fixement par rapport au bâti fixe (1) au moyen d'un plot d'ancrage (6), et dans lequel les points de fixation (4b) sont reliés aux actionneurs piézoélectriques (2) par une tige de flexion (3) s'étendant principalement selon la première direction (AA), une extrémité de la tige de flexion (3) étant fixée à un des actionneurs, une autre extrémité de la tige de flexion (3) étant fixée à un des points de fixation (4b).

20. Dispositif piézoélectrique de pointage selon la revendication 5, dans lequel le porte-miroir (4) possède des deuxièmes fentes (4k) qui sont traversantes selon la première direction (AA) et qui s'étendent sous la forme de spirales à partir du centre (O), les deuxièmes fentes (4k) séparant le centre (O) et les points de fixation (4b).

21. Dispositif piézoélectrique de pointage selon l'une quelconque des revendications 1 à 4, dans lequel chaque point de support (4a) est disposé à équidistance de deux des points de fixation (4b) qui sont les plus proches.

22. Dispositif piézoélectrique de pointage selon l'une quelconque des revendications précédentes, comportant un miroir (5) fixé au porte-miroir (4) au moyen des points de support (4a), le miroir (5) définissant une connexion mécanique avec les points de support (4) qui fixe la position du au moins un point de support (4a) mobile par rapport aux autres points de support (4a).
